# FASCICULE DE BREVET EUROPEEN

(11) **EP 1 641 344 B1**
(45) Date de publication et mention de la délivrance du brevet: **12.01.2011**
(21) Numéro de dépôt: 04767581.4
(22) Date de dépôt: 05.07.2004
(51) Int. Cl.: A21B 3/13

(54) **MOULE SOUPLE RIGIDIFIE**
VERSTEIFTE FLEXIBLE BACKFORM
STIFFENED FLEXIBLE BAKING TIN

(30) Priorité: 04.07.2003 FR 0308221
(43) Date de publication de la demande: 05.04.2006
(73) Titulaire: SEB SA, 69130 Ecully (FR)
(72) Inventeur: BERGERET, Nathalie, F-73100 Aix-Les-Bains (FR)
(74) Mandataire: Pichat, Thierry
(86) Numéro de dépôt international: PCT/FR2004/001745
(87) Numéro de publication internationale: WO 2005/004610

(56) Documents cités:
- EP-A- 1 197 149
- CH-A- 443 870
- DE-A1- 4 222 676
- DE-C- 739 666
- DE-C- 954 755
- FR-A- 1 590 193
- FR-A- 2 827 494
- GB-A- 697 071
- US-A- 2 033 574
- US-A- 2 843 038
- US-A- 4 076 207

## Description

La présente invention concerne un moule utilisé pour réaliser des préparations culinaires du type gâteaux, pâtisserie... (voir exemple GB-A-697071)

On connaît des moules en métal présentant une très grande rigidité, ce qui ne facilite pas le démoulage de la préparation.

On connaît aussi des moules en silicone qui ont l'avantage de passer au four, au four à micro-ondes, au réfrigérateur, au congélateur et au lave-vaisselle sans subir d'altération, mais qui manquent de rigidité.

On peut citer trois inconvénients ayant leur origine dans une grande élasticité des élastomères : le démoulage de la préparation est difficile, la manipulation du moule est peu aisée et la préparation non cuite (souvent liquide) peut facilement déborder pendant la manipulation du moule.

Des solutions ont été proposées pour obtenir un moule suffisamment souple par la réalisation de surépaisseur localisées de matière. Cependant les performances obtenues pour le démoulage et pour le maintien de la préparation liquide ne sont pas toujours satisfaisantes.

Le brevet FR 2 827 494 décrit un moule en élastomère silicone pour une préparation culinaire à cuire ou à chauffer au four.

Le démoulage s'opère comme suit : moule à l'endroit (ouverture vers le haut),on pose le fond du moule sur un support. On exerce alors en direction du support une pression vers le bas sur l'armature , de façon à courber la paroi latérale et amener l'ouverture supérieure sensiblement au niveau du fond.

Pour intéressante qu'elle soit cette solution n'est toutefois pas parfaitement satisfaisante en particulier pour le démoulage de toutes les préparations, dès lors que la paroi latérale recourbée laisse un bourrelet saillant vers le haut en périphérie du fond, constituant un obstacle à la sortie par exemple d'un gâteau mou ou à la bonne introduction d'une pelle à tarte. Le moule n'est pas non plus très stable (fond flasque/déformable au démoulage).

Le problème ici posé est donc de réaliser un nouveau moule pour préparation culinaire permettant un démoulage très aisé de la préparation solide et, potentiellement, favorisant la tenue à la déformation du moule notamment s'il contient une préparation liquide ou lourde, qu'elle soit cuite ou à cuire.

La solution proposée est un moule pour préparation culinaire du type selon la revendication 1.

On conserve sa souplesse à l'ensemble du moule, en améliorant certains démoulages ainsi que la stabilité de la forme et/ou la tenue du fond.

Mais certaines préparations peuvent continuer à poser un problème de poids, voire encore de démoulage.

Il est alors proposé dans l'invention que cette armature rigide « inférieure » se présente comme (au moins) une plaque située à l'endroit du fond du moule.

On conseille également que la paroi latérale de la pièce creuse définisse, en partie inférieure, le périmètre d'une surface de fond dont une partie seulement sera occupée par la paroi de fond en matériau élastomère, cette paroi se présentant alors comme un anneau de matière raccordée périphériquement à la paroi latérale, avec donc une ouverture centrale. Un accès à la plaque de fond ou à l'intérieur du moule est alors permis.

Si cette plaque de fond s'étend, en périphérie extérieure, sensiblement jusqu'à la jonction entre le fond et la paroi latérale, on renforcera (comme d'ailleurs dans une solution précédente à anneau de fond) l'effet de charnière entre le fond et la paroi latérale lors du démoulage. Si de surcroît, intérieurement, ladite plaque s'étend jusqu'au centre du fond, occupant ainsi l'essentiel au moins de la surface de ce fond, on favorisera la tenue mécanique du fond, empêchant les effets de « ventres » sous le poids et assurant une stabilité accrue de forme au fond, en toutes circonstances.

Un aspect de l'invention concerne par ailleurs la liaison entre la pièce creuse et l'armature de fond, lorsque celle-ci est une plaque.

La solution privilégiée pour associer qualité de démoulage, prix de revient du moule et facilité de fabrication consiste en ce que :
- la plaque rigide de fond est pleine, amovible vis à vis de la pièce creuse et est uniquement posée sur ledit anneau de matière de fond de cette pièce creuse, et /ou
- intérieurement, en partie inférieure de sa paroi latérale, la pièce creuse présente au moins une lèvre saillante s'étendant au dessus dudit anneau de matière de fond et la plaque rigide de fond est pleine et retenue par coincement entre l'anneau de matière de fond et la lèvre saillante, ou
- la plaque est liée par moulage à la pièce creuse par sa périphérie où elle est prisonnière d'une gorge périphérique de la pièce creuse définissant un rebord intérieur.

Pour favoriser la stabilité d'un fond annulaire en élastomère et /ou de la plaque de fond face aux contraintes thermiques, on conseille que :
- l'anneau de matière de fond de la pièce creuse présente des différences d'épaisseur, et/ou
- cet anneau de matière de fond présente extérieurement une face sensiblement plane et intérieurement une face avec un épaulement annulaire, de manière à être plus épais en périphérie qu'en partie centrale, et la plaque rigide de fond, disposée dans la pièce creuse, suit sensiblement la surface définie par ladite face intérieure de l'anneau de matière de fond, de sorte que cette plaque rigide de fond présente deux faces opposées curvilignes entre le centre et la périphérie.

Grâce à tout ou partie des caractéristiques qui précèdent, deux techniques de démoulage sont particulièrement conseillées.

Dans le premier cas, on exerce une pression sur le moule tendant à rapprocher le niveau de la paroi de fond et celui de l'armature « supérieure » bordant l'ouverture, en courbant ainsi la paroi latérale du moule qui se retourne sur elle-même, jusqu'à faire passer la paroi de fond au-dessus du niveau de l'extrémité supérieure du moule.

Dans le second cas, on place d'abord le moule à l'envers, puis on agit sur les deux armatures pour rapprocher le fond et l'ouverture, expulsant ainsi la préparation hors du moule.

Un troisième cas est même envisageable : démoulage par retournement du moule disposé avec son ouverture vers le haut et posé sur une contre-forme.

Dans tous les cas la rigidité d'ensemble du moule est suffisante pour pouvoir utiliser des ustensiles de préhension, par exemple des manches amovibles.

D'autres particularités et avantages de l'invention apparaîtront dans la description ci-dessous d'un mode de réalisation donné à titre d'exemple non limitatif.

Aux dessins annexés :
- la figure 1 représente une vue en perspective trois-quarts de dessous d'un moule;
- la figure 2 représente une vue en coupe selon la ligne II-II de la figure 1;
- la figure 3 montre le détail III de la figure 2;
- la figure 4 représente, vue de dessus, une armature rigide utilisée dans un moule;
- la figure 5 représente une vue en coupe selon l'axe V-V de l'armature de la figure 4; et
- les figures 6 à 13 représentent chacune une coupe locale d'une possible réalisation adaptée du moule, suivant la même coupe que la figure 2.

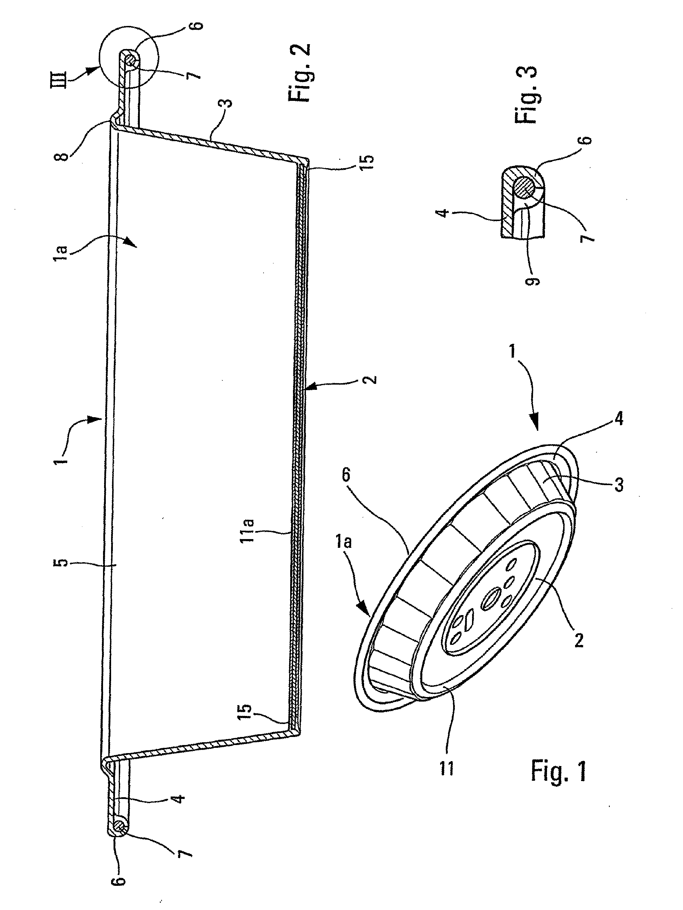

Tel qu'on peut le voir en particulier aux figures 1 et 2, le moule à préparation culinaire 1 selon la présente invention se présente comme une pièce creuse la en un matériau souple (aisément déformable), élastomère (donc à caractéristiques élastiques), par exemple en silicone. Cette pièce creuse forme le récipient à l'intérieur duquel la préparation culinaire peut être disposée. Elle comporte une paroi de fond 2, une paroi latérale 3 qui se dresse du fond et de préférence une couronne supérieure 4 définissant un rebord extérieur de raidissement et de préhension qui s'étend radialement à partir de la partie supérieure de la paroi latérale 3, autour de l'ouverture 5 (la pièce est supposée ici de section circulaire).

Le moule 1 peut avoir différentes formes : ronde, rectangulaire, elliptique...

S'il est rond comme illustré, pour un diamètre d'ouverture 5 de l'ordre de 240mm, l'épaisseur de la couronne 4 est en général comprise entre 0,5% et 1,5% de ce diamètre, de préférence 1%. Dans un mode de réalisation préférentiel, l'épaisseur de la couronne 4 est du même ordre de grandeur que les parois de fond 2 et latérale 3, et de préférence, est comprise entre 1 mm et 4 mm.

L'extrémité supérieure de la paroi latérale 3 délimite l'ouverture 5 par laquelle la préparation peut être introduite dans la pièce 1a. L'extrémité annulaire 6 de la couronne supérieure 4 située au niveau de l'ouverture 5 comporte une première armature rigide 7 (ou armature supérieure).

L'armature 7 peut être, par exemple, en matière plastique ( en particulier thermodurcie ou type PA 6.6) ou en métal tel qu'en acier inoxydable ou en aluminium. L'armature 7 peut en particulier être un fil d'un diamètre compris entre 1mm et 5mm.

L'armature 7, disposée avantageusement sur toute la périphérie du moule, est située au niveau de l'ouverture 5. Elle est reliée à la paroi latérale 3 uniquement par la couronne 4, à distance de l'ouverture 5. Cette distance est typiquement comprise entre 10mm et 40mm. Pour un moule dont l'ouverture 5 a un diamètre de 240mm et dont la hauteur est de 50mm environ, l'armature 7 sera de préférence située à une distance de l'ouverture 5 comprise entre 0,08 et 0,14 fois ce diamètre, de préférence 0,12 fois.

Dans le mode de réalisation illustré, la couronne 4 est reliée à la partie supérieure de la paroi latérale 3 par l'intermédiaire d'un bourrelet convexe vers le haut, 8.

Cette zone 8 permet de faciliter le démoulage, en constituant l'initiation de la courbure de la paroi latérale 3 permettant le démoulage. En effet, l'effort le plus important consistant à rompre l'angle que font la couronne 4 à la paroi latérale 3 n'est plus nécessaire.

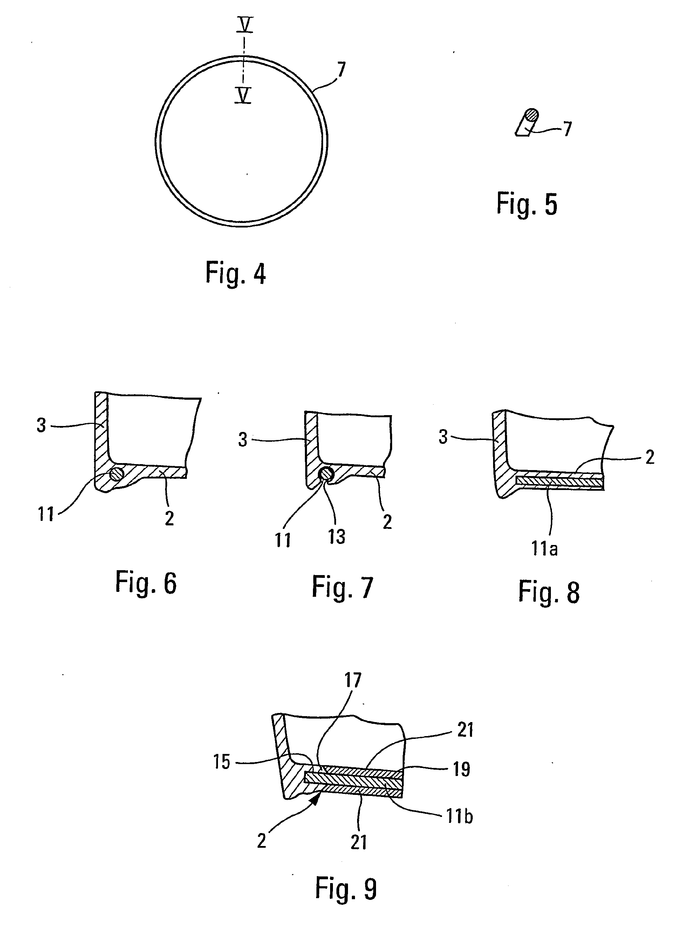

Dans l'exemple illustré par les figures 4 et 5, l'armature 7 a la forme d'un anneau circulaire, y compris en section.

Dans l'exemple illustré par les figures, la couronne 4 est réalisée en continuité et dans le même matériau que la pièce 1a. On pourrait toutefois utiliser une couronne 4 amovible.

Sur la figure 1, l'armature est noyée dans le matériau constituant la couronne 4, à l'endroit de l'excroissance 6 située à l'extrémité radiale de celle-ci. Sur les figures 2 et 3, l'armature 7 est liée à la couronne de façon amovible, par engagement à force dans une gorge périmétrique 9 partiellement ouverte vers l'intérieur.

Bien que non représenté dans les figures, il est possible de disposer au niveau de l'armature 7 de moyens adaptés à coopérer avec des ustensiles de préhension amovibles.

Le moule décrit ci-avant correspond typiquement à celui présenté dans FR-A-2 827 494.

Le moule de l'invention se distingue de celui décrit dans cette demande antérieure en particulier par la présence d'une autre armature rigide notamment repérée 11,11a,11b,11c et 11d, respectivement sur les figures 1, 2, 9, 10 et 11.

Cette seconde armature est située en partie inférieure de la pièce creuse la et liée à elle de façon à favoriser le démoulage de la préparation culinaire, voire stabiliser la forme du fond 2. Lors du démoulage ou lors du transport du moule plein.

A l'image de l'armature supérieure 7, l'armature inférieure peut être annulaire ou sensiblement annulaire, avec une section ronde, comme illustré sur les figures 4 et 5.

Dans ce cas, on conseille, comme montré sur les figures 6 et 7 que l'anneau 11 rigide soit lié à la paroi de fond 2 en étant situé à proximité de la jonction entre ce fond et la paroi latérale 3.

On remarquera dans la solution des figures 6 et 7 que le jonc annulaire 11 peut être soit noyé à l'intérieur de la matière élastomère de la pièce creuse 1a, soit à rapporter sur celle-ci à l'intérieur d'une gorge à col étroit de retenue 13 s'étendant de façon annulaire en périphérie du fond 2, avec l'ouverture d'accès de préférence située vers l'extérieur (sous le fond), ainsi que le montre la figure 7.

La solution d'anneau 11 noyé de la figure 6 sera toutefois a priori préférée, pour des questions de coût, de facilité de nettoyage du moule et donc de propreté de celui-ci. En outre, disposée ainsi l'armature de rigidification implique que cette armature soit présente lors de la réalisation de la pièce creuse 1a qui est typiquement fabriquée par moulage.

Une autre solution consiste à utiliser non pas un jonc 11, mais une plaque située à l'endroit du fond du moule (figures 2 et 8 à 13).

La plaque s'étend de préférence suivant toute la surface du fond 2.

La liaison entre la pièce 1a et la plaque peut être réalisée en particulier de deux manières : soit la plaque est noyée dans la matière souple de la pièce située à l'endroit du fond 2 (figure 8), soit la plaque est liée en périphérie à la pièce 1a, par l'introduction dans une gorge 15 horizontale s'étendant périphériquement (de préférence sur -tout- le périmètre), tournée vers l'intérieur et appartenant à un rebord 17 de la pièce 1a.

Dans les deux cas, la fabrication de la pièce 1a s'effectue par moulage.

Si l'on veut bloquer la plaque vis-à-vis de la pièce 1a, la plaque étant placée dans le moule de moulage avant que la matière souple soit apportée : le retrait et l'élasticité de la matière bloquent dans le premier cas la plaque vis à vis du rebord 17. Sinon, on moule la pièce souple 1a, avec sa gorge 15, puis on vient y engager le bord périphérique de la plaque de fond 11c ou 11d, pour l'y retenir tout en autorisant son retrait, par exemple pour un lavage séparé.

Si la plaque (11a) est noyée, il peut s'agir d'une tôle (métallique) ou d'une plaque plastique rigide (thermodurcissable de préférence).

Si elle est amovible vis-à-vis de la pièce 1a, on conseille une plaque "revêtue", doublée au moins sur sa face supérieure 19 par un revêtement anti-adhésif 21 tel que du polytétrafluoréthylène (PTFE). Dans ce cas, la quasi totalité du fond 2 est alors réalisée par un disque plein à surface anti-adhésive clipsée à la pièce 1a.

L'avantage d'une solution à plaque comme sur les figures 2, 8, 9, et 10 à 13 par rapport à la solution à jonc annulaire comme sur les figures 1, 6 et 7 est la meilleure rigidité du fond qui ne peut se déformer, que ce soit pendant le démoulage ou sous le poids de la préparation, si la plaque est suffisamment rigide.

En outre, l'utilisateur n'a pas, lors du démoulage, à réfléchir où placer ses doigts sur le fond: il rencontre toujours une zone rigide où appuyer.

A noter qu'une solution à paroi de fond localement renforcée par plusieurs plaques localisées, si nécessaire liées entre elles par un jonc, pourrait à cet égard, apporter satisfaction (solution non représentée).

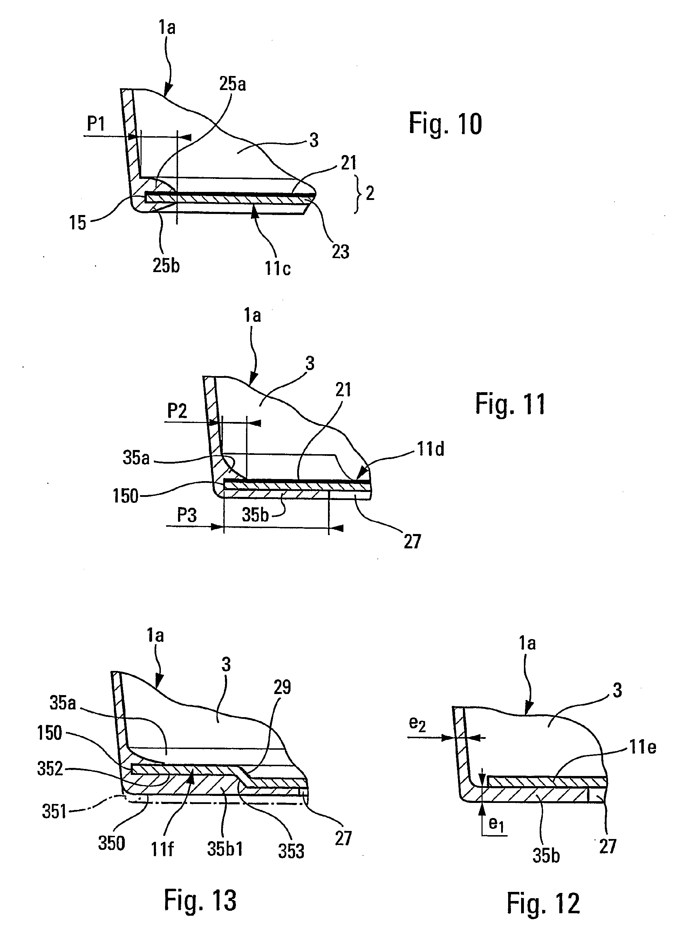

Sur la figure 10, la plaque pleine 11c présente une plaque rigide 23 doublée en face supérieure par un revêtement de protection thermique et/ou anti-rayures et/ou anti-adhésif 21. La plaque 11c est clipsée périphériquement dans la gorge 15 précitée. On notera que les renflements périphériques, ou lèvres saillantes, (continus ou non), respectivement supérieur (e) et inférieur(e) 25a,25b, que forme la pièce 1a vers son fond ou à la base de sa paroi latérale sont sensiblement d'égale profondeur P1 dans le plan du fond 2 du moule.

Par contre, sur la figure 11, les profondeurs correspondantes, respectivement P2 et P3, sont inégales. En particulier, la profondeur P2 au dessus de la plaque 11d peut être faible (1 à 10 mm environ) par rapport à P3 (rapport P3/P2 compris entre plus d'un et 20/1, et de préférence entre 5/1 et 10/1). A cet égard, on conseille que le renflement inférieur 35b définisse une paroi de fond continue, annulaire, limitée vers son centre par un trou 27 que viendra recouvrir la plaque de renfort telle que 11d.

Si une telle ouverture de fond est prévue (favorable pour démouler) la paroi latérale 3 de la pièce creuse définira donc, à sa base inférieure, le périmètre d'une surface de fond dont une partie seulement est occupée par ladite paroi de fond 35b qui se présente alors comme un anneau de matière raccordée périphériquement et de façon donc monobloc à la paroi latérale 3. Une telle paroi de fond 35b pourra être plus épaisse (voir e1 figure 12) que la paroi latérale 3 (épaisseur e2).

Ainsi, cette plaque sera soutenue par une paroi support (35b) et retenue au-dessus par un ou plusieurs renflements étroits 35a la maintenant plaquée contre la paroi 35b, en utilisation courante, le trou 27 permettant de pousser sur la plaque 11d depuis l'extérieur, pour la retirer par exemple au moment du nettoyage.

Avantageusement, et comme déjà indiqué, la surface annulaire définie par l'anneau de matière 35b occupera entre 1/5 et 4/5, et de préférence entre 1/3 et 2/3, de la surface totale de la surface de fond de la pièce creuse (surface de la plaque de renfort si celle-ci est pleine, et s'étend du centre jusqu'à la limite entre le fond et la paroi latérale 3).

Plutôt qu'une lèvre supérieure 35a continue, plusieurs tronçons (en particulier trois ou quatre) pourront être préférés. On aura alors une gorge périphérique 150 de clipsage de la plaque qui sera discontinue (figure 11) .

Si l'ouverture de fond 27 est prévue, la plaque de fond 11d sera pleine. Elle pourra être amovible vis à vis de la pièce creuse.

Figure 12, une telle plaque, ici repérée 11e, pleine et amovible, est uniquement posée sur la paroi de fond annulaire 35b. Il n'y a plus de lèvre ou renflement de retenue au dessus de la plaque. C'est le poids de la pâte (ou d'un contenu solide disposé dans la pièce 1a) qui maintient la plaque dans le fond de la pièce. Si on retourne le moule vide, la plaque tombe.

Sur la figure 13, la plaque pleine de fond 11f présente une marche annulaire 29 située en partie intermédiaire entre sa périphérie et son centre. l'anneau de matière de fond de la pièce creuse présente des différences d'épaisseur.

L'anneau 35b1 de matière de fond de la pièce creuse la présente extérieurement une face 350 essentiellement sensiblement plane (au-delà éventuellement d'un bourrelet périmétrique extérieur 351) et, intérieurement, une face 352 présentant un épaulement annulaire 353, de manière à être plus épais en périphérie qu'en partie centrale. La plaque 11f suit sensiblement la surface définie par la face intérieure 352 de l'anneau de matière de fond, de sorte que cette plaque rigide de fond présente deux faces opposées curvilignes entre le centre et la périphérie, comme illustré figure 13. On résiste ainsi mieux aux contraintes thermiques.

La plaque 11f peut être amovible. On l'a ici coincée périphériquement dans la fente 150, entre l'anneau étagé de matière 35b1 et une lèvre supérieure 35a qui peut être identique à celle de la figure 11, par exemple.

Les plaques 11e, 11f pourront être en verre, bien que les autres choix ci-avant soit possibles, toutes les plaques pouvant d'ailleurs être interverties entre les modes de réalisation.

Le démoulage des moules représentés aux figures peut s'opérer particulièrement de deux façons, suivant que l'on démoule à l'endroit, ou à l'envers.

Première hypothèse: moule à l'endroit, horizontal. L'opérateur pousse le bord supérieur de la pièce 1a, de l'armature supérieure 7 (si elle est prévue), vers le bas et le fond vers le haut, en agissant sur l'armature 11... concernée. Sans nécessairement poser le moule sur un support, il poursuit son mouvement jusqu'à faire passer le fond 2 au-dessus du niveau de l'ouverture 5, pour finir par retourner le moule en doigt de gant, l'élasticité et la déformabilité de la paroi latérale 3 le permettant, ceci jusqu'à séparation entre la plaque et la pièce 1a, (si la plaque est amovible).

Le jonc 11, et plus encore les plaques 11a... permettent alors de glisser si nécessaire un ustensile le long de la paroi supérieure totalement dégagée du fond. Aucun rebord ne gêne.

Lors de ce retournement en doigt de gant, la disposition du jonc ou du bord périmétrique de la plaque à l'endroit du changement de pente entre la paroi latérale 3 et le fond 2 accentue l'effet de charnière à cet endroit.

Deuxième hypothèse: moule à l'envers, tenu par l'utilisateur. Ce dernier pousse sur la périphérie du fond en même temps qu'il tire sur la couronne 4, en soulevant légèrement le moule de préférence. La paroi latérale se plie extérieurement sur elle-même. La préparation est poussée hors du moule qui tend, à nouveau, à se replier en doigt de gant, cette fois-ci vers le bas.

Avec la rigidité du fond, celui-ci conserve sa forme, sans se gondoler de manière telle qu'on risque moins d'endommager la préparation, en particulier s'il s'agit d'un gâteau.

Même si le rebord extérieur avec la couronne 4 est préféré à un simple bourrelet de limite haute de paroi, on pourrait ne pas le prévoir, de même pour l'armature supérieure 7.

Eventuellement, sur les figures 10, 11 et 13 la plaque de fond 11c, 11d, 11f peut être amovible.

## Revendications

1. Moule pour une préparation culinaire, comprenant :
- une pièce creuse souple (1a) en un matériau élastomère présentant une paroi latérale (3) dressée dont l'extrémité supérieure définit une ouverture (5) et qui, en partie inférieure, est raccordée à la périphérie d'un anneau de matière (25b, 35b, 35b1), et
- une plaque de fond (11c, 11d, 11f) plaquée sur l'anneau de matière (25b, 35b, 35b1),
**caractérisé en ce que** :
- intérieurement, en partie inférieure de sa paroi latérale (3), la pièce creuse (1a) présente au moins une lèvre saillante (25a, 35a) s'étendant au dessus de l'anneau de matière (25b, 35b, 35b1) de cette pièce creuse (1a), et **en ce que**
- la plaque de fond (11c, 11d, 11f) est pleine et retenue par coincement entre l'anneau de matière (25b, 35b, 35b1) et la lèvre saillante (25a, 35a).

2. Moule selon la revendication 1, **caractérisé en ce que** la plaque de fond (11c, 11d, 11f) est liée à la pièce creuse (1a) par sa périphérie plane où elle est engagée dans une gorge périphérique (15, 150) sensiblement horizontale de la pièce creuse (1a).

3. Moule selon la revendication 1 ou 2, **caractérisé en ce que** l'anneau de matière définit une paroi de fond (35b, 35b1) pour la pièce creuse (1a).

4. Moule selon la revendication 3, **caractérisé en ce que** la surface annulaire définie par la paroi de fond (35b, 35b1) occupe entre 1/5 est 4/5 de la surface totale du fond de la pièce creuse (1a).

5. Moule selon la revendication 3 ou 4, **caractérisé en ce que** la surface annulaire définie par la paroi de fond (35b, 35b1) occupe entre 1/3 et 2/3 de la surface totale du fond de la pièce creuse (1a).

6. Moule selon l'une quelconque des revendications 1 à 5, **caractérisé en ce que** la plaque de fond (11c, 11d, 11f) est liée par moulage à la pièce creuse (1a) par sa périphérie plane où elle est prisonnière d'une gorge périphérique (15, 150) de la pièce creuse.

7. Moule selon l'une quelconque des revendications 1 à 5, **caractérisé en ce que** la plaque de fond (11c, 11d, 11f) est amovible vis à vis de la pièce creuse (1a).

8. Moule selon l'une des revendications précédentes, **caractérisé en ce que** la paroi de fond (35b1) de la pièce creuse (1a) présente des différences d'épaisseur.

9. Moule selon l'une quelconque des revendications 1 à 8, **caractérisé en ce que** la paroi de fond (35b1) de la pièce creuse présente extérieurement une face sensiblement plane et intérieurement une face présentant un épaulement annulaire (353), de manière à être plus épais en périphérie qu'en partie centrale, et **en ce que** la plaque de fond (11f), disposée dans la pièce creuse (1a), suit sensiblement la surface définie par ladite face intérieure de ladite paroi de fond (35b1), de sorte que cette plaque rigide de fond présente deux faces opposées curvilignes entre le centre et la périphérie.

10. Moule selon l'une quelconque des revendications 1 à 9, **caractérisé en ce qu'**il comprend une couronne supérieure (4) s'étendant vers l'extérieur de la paroi latérale(3), transversalement à elle, sensiblement au niveau de l'ouverture (5) de ladite pièce creuse (1a), et **en ce qu'**au moins une autre armature rigide (7), annulaire ou sensiblement annulaire, est liée à cette couronne supérieure (4), à distance de l'ouverture (5).

11. Moule selon l'une quelconque des revendications 1 à 10, **caractérisé en ce que** la pièce creuse (1a) est monobloc et en silicone.

12. Moule selon l'une quelconque des revendications 1 à 11, **caractérisé en ce que** la face supérieure (19) de la plaque de fond (11c, 11d, 11f) est revêtue d'un revêtement anti-adhésif (21), par exemple, par du PTFE.

## Claims

1. A mould for a culinary preparation, consisting of:
- a flexible hollow piece (1a) made from an elastomer material with an upright side wall (3), the upper edge of which forms an opening (5) and the lower part of which is connected to the periphery of a ring of material (25b, 35b, 35b1), and
- a base plate (11c, 11d, 11f) stuck onto the ring of material (25b, 35b, 35b1),
wherein :
- internally, in the lower part of its side wall (3), the hollow piece (1a) has a t least one protruding lip (25a, 35a) extending above the ring of material (25b, 35b, 35b1) ofthis hollow piece (1a), and wherein
- the base plate (11c, 11d, 11f) is solid and wedged in place between the ring of material (25b, 35b, 35b1) and the protruding lip (25a, 35a).

2. A mould according to claim 1, wherein the base plate (11c, 11d, 11f) is connected to the hollow piece (1a) by its flat periphery where it is introduced into an approximately horizontal peripheral groove (15, 150) of the hollow piece (1a).

3. A mould according to claims 1 or 2, wherein the ring of material forms a bottom wall (35b, 35b1) for the hollow piece (1a).

4. A mould according to claim 3, wherein the ring-shaped surface formed by the bottom wall (35b, 35b1) occupies between 1/5 and 4/5 of the total surface area of the base of the hollow piece (1a).

5. A mould according to claim 3 or 4, wherein the ring-shaped surface formed by the bottom wall (35b, 35b1) occupies between 1/3 and 2/3 of the total surface area of the base of the hollow piece (1a).

6. A mould according to any one of the claims 1 to 5, wherein the base plate (11c, 11d, 11f) is connected by molding to the hollow piece (1a) by its flat periphery where it is secured by a peripheral groove (15, 150) of the hollow piece.

7. A mould according to any one of the claims 1 to 5, wherein the base plate (11c, 11d, 11f) can be detached from the hollow piece (1a).

8. A mould according to one of the preceding claims, wherein the bottom wall (35b1) of the hollow piece (1a) displays variations in thickness.

9. A mould according to any one of claims 1 to 8, wherein the bottom wall (35b1) of the hollow piece displays externally an approximately flat surface and internally a surface presenting a ring-shaped ledge (353), making it thicker in the periphery than in the central part, and wherein the base plate (11f), positioned inside the hollow piece (1a), approximately follows the shape defined by the aforesaid internal surface of the aforesaid bottom wall (35b1), such that this rigid base plate presents two opposing curvilinear surfaces between the center and the periphery.

10. A mould according to any one of the claims 1 to 9, wherein it includes an upper rim (4) which extends towards the outside from the side wall (3), transversely to it, approximately at the level of the opening (5) of the aforesaid hollow piece (1a), and also wherein at least one other ring-shaped or approximately ring-shaped stiffener (7) is connected to this upper rim (4), some distance from the opening (5).

11. A mould according to any one of the claims 1 to 10, wherein the hollow piece (1a) is single-piece and made from silicone.

12. A mould according to any one of claims 1 to 11, wherein the upper surface (19) of the base plate (11c, 11d, 11f) is coated with a non-stick coating (21), for example PTFE.

## Patentansprüche

1. Form zur Zubereitung von Speisen mit
- einem flexiblen Hohlkörper (1a) aus einem Elastomermaterial, mit einer hochgezogenen Seitenwand (3), deren oberes Ende eine Öffnung (5) bestimmt und die an ihrem unteren Teil mit dem Umfangsrand eines Materialrings (25b, 35b, 35b1) verbunden ist und
- einer Bodenplatte (11c, 11d, 11f), die an dem Materialring (25b, 35b, 35b1) angebracht ist,
**dadurch gekennzeichnet, dass**
- der Hohlkörper (1a innen am unteren Teil seiner Seitenwand (3) zumindest eine vorstehende Lippe (25a, 35a) hat, die sich oberhalb des Materialrings (25b, 35b, 35b1) des Hohlkörpers (1a) erstreckt, und **dadurch**, dass
- die Bodenplatte (11c, 11d, 11f) massiv ist und durch Verklemmen zwischen dem Materialring (25b, 35b, 35b1) und der vorstehenden Lippe (25a, 35a) gehalten ist.

2. Form nach Anspruch 1, **dadurch gekennzeichnet, dass** die Bodenplatte (11c, 11d, 11f) mit dem Hohlkörper (1a) durch ihren ebenen Rand verbunden ist, an dem sie mit einer im Wesentlichen horizontal zum Hohlkörper (1a) verlaufenden Umfangsnut (15, 150) in Eingriff steht.

3. Form nach Anspruch 1 oder 2, **dadurch gekennzeichnet, dass** der Materialring eine Bodenwand (35b, 35b1) für den Hohlkörper (1a) bestimmt.

4. Form nach Anspruch 3, **dadurch gekennzeichnet, dass** die durch die Bodenwand (35b, 35b1) bestimmte kreisförmige Oberfläche zwischen 1/5 und 4/5 der gesamten Oberfläche des Bodens des Hohlkörpers (1a) einnimmt.

5. Form nach Anspruch 3 oder 4, **dadurch gekennzeichnet, dass** die durch die Bodenwand (35b, 35b1) bestimmte kreisförmige Oberfläche zwischen 1/3 und 2/3 der gesamten Oberfläche des Bodens des Hohlkörpers (1a) einnimmt.

6. Form nach einem der Ansprüche 1 bis 5, **dadurch gekennzeichnet, dass** die Bodenplatte (11c, 11d, 11f) durch Vergießen mit dem Hohlkörper (1a) über dessen ebenen Rand verbunden ist, an dem sie durch eine Umfangsnut (15, 150) des Hohlkörpers eingefasst ist.

7. Form nach einem der Ansprüche 1 bis 5, **dadurch gekennzeichnet, dass** die Bodenplatte (11c, 11d, 11f) in Bezug auf den Hohlkörper (1a) herausnehmbar ist.

8. Form nach einem der vorangehenden Ansprüche, **dadurch gekennzeichnet, dass** die Bodenwand (35b1) des Hohlkörpers (1a) unterschiedliche Dicken aufweist.

9. Form nach einem der Ansprüche 1 bis 8, **dadurch gekennzeichnet, dass** die Bodenwand (35b1) des Hohlkörpers außen eine im Wesentlichen ebene Fläche hat und innen eine Fläche mit einer ringförmigen Schulter (353) hat, so dass sie am Rand dicker ist als im Mittenbereich, und **dadurch**, dass die im Hohlkörper (1a) angeordnete Bodenplatte (11f) der durch die Innenfläche der Bodenwand (35b1) bestimmten Fläche im Wesentlichen dergestalt folgt, dass die steife Bodenplatte zwischen der Mitte und dem Rand zwei gegenüberliegende gekrümmte Flächen hat.

10. Form nach einem der Ansprüche 1 bis 9, **dadurch gekennzeichnet, dass** sie einen oberen Kranz (4) umfasst, der sich zur Außenseite der Seitenwand (3), quer zu letzterer und im Wesentlichen auf Höhe der Öffnung (5) des Hohlkörpers (1a) erstreckt, und **dadurch**, dass ein anderes ringförmiges oder im Wesentlichen ringförmiges starres Teil (7) mit diesem oberen Kranz (4) in einem Abstand von der Öffnung (5) verbunden ist.

11. Form nach einem der Ansprüche 1 bis 10, **dadurch gekennzeichnet, dass** der Hohlkörper (1a) aus einem Stück geformt und aus Silikon ist.

12. Form nach einem der Ansprüche 1 bis 11, **dadurch gekennzeichnet, dass** die Oberfläche (19) der Bodenplatte (11c, 11d, 11f) mit einer Antihaftbeschichtung (21), z.B. PTFE, beschichtet ist.
